# EUROPÄISCHE PATENTSCHRIFT

(11) **EP 1 664 801 B1**
(45) Veröffentlichungstag und Bekanntmachung des Hinweises auf die Patenterteilung: **02.06.2010**
(21) Anmeldenummer: 04766565.8
(22) Anmeldetag: 20.08.2004
(51) Int. Cl.: G01P 1/02, G01D 11/24

(54) **MAGNETFELDSENSOR**
MAGNETIC FIELD SENSOR
CAPTEUR DE CHAMP MAGNETIQUE

(30) Priorität: 26.09.2003 DE 10345049
(43) Veröffentlichungstag der Anmeldung: 07.06.2006
(73) Patentinhaber: SIEMENS AKTIENGESELLSCHAFT, 80506 München (DE)
(72) Erfinder: MODEST, Otmar, 79331 Teningen (DE)
(86) Internationale Anmeldenummer: PCT/EP2004/051867
(87) Internationale Veröffentlichungsnummer: WO 2005/031371

(56) Entgegenhaltungen:
- WO-A-03/040659
- DE-A- 10 146 157
- DE-U- 29 516 373
- US-B1- 6 291 990

## Beschreibung

Die Erfindung betrifft einen Magnetfeldsensor, insbesondere zur Messung der Drehzahl eines rotierenden Getriebebauteils, mit einer Hallsonde, mit mindestens einem Permanentmagneten, wobei sich die Hallsonde in dem Einflussbereich des Magnetfeldes des Permanentmagneten befindet, mit einem Gehäuse, welches die Hallsonde umgibt, wobei der Permanentmagnet an dem Gehäuse befestigt ist, wobei das Gehäuse zumindest teilweise aus Kunststoff besteht und der Permanentmagnet als Ring oder Hohlzylinder ausgebildet ist, wobei die Längsachse des Permanentmagneten und eine Induktionsachse des Hallsensors, welche Induktionsachse senkrecht zu der elektrischen Feldrichtung der Hallspannung und der elektrischen Hauptstromrichtung in der Hallsonde orientiert ist, im Wesentlichen zusammenfallen.

Magnetfeldsensoren der vorgenannten Art finden bevorzugt zur Drehzahlüberwachung in Nutzfahrzeugen Anwendung, weil die Signalgeber, bei denen als aktive Elemente Feldplatten oder Hallgeneratoren verwendet werden, im Gegensatz zu Induktionsgebern den Vorzug aufweisen, dass relativ niedrige Drehzahlen bzw. Bewegungen im Stillstandsbereich erfasst werden können. Neben dem Einsatz zur Drehzahlmessung in einem Kraftfahrzeuggetriebe können Magnetfeldsensoren gemäß der Erfindung auch zur Überwachung sonstiger Bewegungen, beispielsweise rotierenden Bewegungen oder Translationen eingesetzt werden.

Ein Magnetfeldsensor herkömmlicher Bauweise ist bereits aus der EP 0 546 355 B1 bekannt. Die außerordentlich akkurate Funktion dieses Bauteils lässt sich nur aufgrund eines sehr aufwendigen Fertigungs- und Montageprozesses erreichen. Die vielen Arbeitsschritte umfassen unter anderem die Befestigung des Permanentmagneten an einem Halter, der zu dem Permanentmagneten eine Presspassung aufweist, mittels eines UV-aushär-tenden Klebers nach vorhergehender genauer Justierung der Position der Hallsonde zu dem Permanentmagneten. Die regelmäßig außerordentlichen Betriebsbedingungen dieser Magnetfeldsensoren, insbesondere hinsichtlich beträchtlicher Temperaturschwankungen von -40°C bis + 150°C und hinsichtlich mechanischer Vibrationen und Schockbeanspruchungen erfordern eine Befestigung des Permanentmagneten in dem Magnetfeldsensor von außerordentlicher Stabilität. Eine hinreichende Festigkeit der Verbindung des schweren Permanentmagneten an dem dafür vorgesehenen Halter kann beispielsweise dadurch erreicht werden, dass die Kontaktstellen mittels eines Primers aktiviert werden, bevor der UV-aushärtende Kleber aufgetragen wird. Nach der UV-Aushärtung muss eine zusätzliche thermische Aushärtung bei Raumtemperaturen von mindestens drei Stunden erfolgen, damit die erforderliche Güte der Verbindung gewährleistet werden kann. Damit die Impulsbreite der von der Hallsonde generierten Signale bei Vorbeistreichen eines Zahnrades oder eines ähnlichen Magnetfeldkonzentrierers, die gewünschte Impulsbreite aufweisen, ist die Hallsonde, die regelmäßig als Hall-IC ausgebildet ist, zu dem bevorzugt als Ringmagnet ausgebildeten Patentmagneten exakt auszurichten. Aus der Vielzahl der hier unvollständig aufgeführten, mit höchster Präzision zu verrichtender Arbeitsschritte lässt sich der Nachteil des hohen Aufwandes der Montage und Fertigung herkömmlicher Magnetfeldsensoren erahnen.

Aus dem deutschen Gebrauchsmuster DE 295 16 373 U1 ist bereits ein Magnetfeldgeber der eingangs genannten Art bekannt, bei welchem ein ringförmiger Permanentmagnet fluchtend in ein hülsenartiges Gehäuse eingesetzt wird und die Hallsonde anschließend insbesondere in Richtung der magnetischen Achse des Permanentmagneten aufwendig justiert und abschließend mit einer Vergussmasse zu dem Permanentmagneten und dem Gehäuse fixiert wird.

Aus der internationalen Patentanmeldung WO 03/040659 A1, dem US-Patent US 6,291,990 B1 und der deutschen Offenlegungsschrift DE 101 46 157 A1 sind jeweils Anordnungen mit einem Sensor bekannt, bei welchen die Hall-Sonde eines Sensors außerhalb einer magnetischen Nullachse angeordnet ist, was eine in sonstiger Weise sehr exakte Positionierung des Sensors zu einem sich drehenden Bauteil erfordert, welches den magnetischen Fluss im Bereich der Hallsonde von dem Sensor als signifikante Änderung messbar ändert. Das Signal aus einer derartigen Sensoranordnung bedarf darüber hinaus einer besonderen Qualität, da die Anordnung der Sonde in dem magnetisch nicht neutralen Bereich ein permanentes Grundsignal zur Folge hat, deren Höhe stark abhängig ist von magnetischen Umgebung des Sensors und das eigentlich auszuwertende Signal starke Abhängigkeit von dem Abstand des Sensors zu der eigentlichen impulsgebenden Marke aufweist.

Ausgehend von den Problemen und Nachteilen des Standes der Technik hat es sich die Erfindung zur Aufgabe gemacht, einen Magnetfeldsensor zu schaffen, welcher mit weniger Aufwand und niedrigerer Fehleranfälligkeit herstellbar ist.

Erfindungsgemäß wird die Aufgabe durch einen Magnetfeldsensor der eingangs beschrieben Art gelöst, der die in Anspruch 1 aufgeführten Merkmale aufweist. Die abhängigen Ansprüche beinhalten vorteilhafte Weiterbildungen der Erfindung.

Die Befestigung des Permanentmagneten an dem Gehäuse bietet gegenüber dem Stand der Technik eine Reihe von Vorteilen. Da das Gehäuse regelmäßig zum Schutz der Hallsonde robust und starr ausgebildet ist, weist es eine besondere Eignung auf, den regelmäßig gewichtigen Permanentmagneten zu haltern. Hierbei erweist es sich als besonders vorteilhaft, dass das Gehäuse in seiner Form an diese Aufgabe leicht angepasst werden kann. Ein entscheidender Vorteil liegt in der Tatsache begründet, dass der Permanentmagnet nicht mehr aufwendig an einen Halter, welcher im Stand der Technik regelmäßig an einer Leiterplatte befestigt war, mittels Klebung befestigt werden muss.

Eine besonders gute Verankerung und hervorragende elektrische und elektronische Eigenschaften des Magnetfeldsensors ergeben sich, wenn der Permanentmagnet als Ring oder Hohlzylinder ausgebildet ist. Auf diese Weise kann das Gehäuse dem Permanentmagneten besonders einfach eine zusätzliche formschlüssige Halterung bieten. Bei einer Ausrichtung der Längsachse des Permanentmagneten in Richtung der Induktionsachse des Hallsensors ergeben sich unter fast sämtlichen Betriebsbedingungen besonders gut auswertbare Impulse des Magnetfeldsensors. Die Induktionsachse ist hierbei als senkrecht zu der elektrischen Feldrichtung der Hallspannung und der elektrischen Hauptstromrichtung in der Hallsonde orientiert, definiert. Die besten Ergebnisse werden erzielt, wenn die Induktionsachse mit der Zylinderlängsachse des Permanentmagneten zusammenfällt.

Mit Vorteil hinsichtlich der Fertigung aber auch hinsichtlich der EMV-Eigenschaften kann das Gehäuse zumindest teilweise aus Kunststoff bestehen. Eine Optimierung hinsichtlich der EMV-Eigenschaften ergibt sich vor allen dann, wenn das Gehäuse keinen für Einkopplungen anfälligen Kondensator mit der Hallsonde bzw. dem Hall-IC bildet. Zuverlässig kann dies vermieden werden, wenn das Gehäuse vollständig aus Kunststoff besteht. Für den bevorzugten Einsatzbereich des erfindungsgemäßen Magnetfeldsensors ist es besonders zweckmäßig, wenn der Kunststoff hochtemperaturbeständig ist.

Eine vorteilhafte Weiterbildung der Erfindung sieht vor, dass der Magnetfeldsensor einen Stecker oder eine Steckerbüchse aufweist, welcher als Kunststoffteil mit umspritzten Kontakten ausgebildet ist. Eine derartige Ausführung dient vor allem dem modularen Aufbau des Sensors und der daran anschließenden elektrischen Leitungen. Daneben eröffnet sich auf diese Weise aber auch eine vorteilhafte Ausbildung des erfindungsgemäßen Magnetfeldsensors, bei welcher das Gehäuse einen verschließbaren Gehäusegrundkörper aufweist und die Steckerbüchse bzw. der Stecker und der Gehäusegrundkörper miteinander verschweißbar sind, wenn der Gehäusegrundkörper ebenfalls aus einem entsprechenden Kunststoff gefertigt ist. Als Schweißverfahren für diese beiden Bauteile bietet sich bevorzugt das Ultraschallschweißen, das Vibrationsschweißen oder Rotationsschweißen an.

Bevorzugt werden erfindungsgemäß das Gehäuse oder der Gehäusegrundkörper als Spritzgussbauteil ausgebildet und der Permanentmagnet in das Gehäuse eingespritzt. Auf diese Weise kann eine hervorragende Anbindung des Permanentmagneten an das Gehäuse in nur einem Arbeitsgang erreicht werden. Eine derartige Ausbildung eröffnet darüber hinaus die bevorzugte Formgebung des Gehäusegrundkörpers als verschließbaren, einseitig geschlossenen, hülsenartigen Zylinder, wobei die Hall-sonde bevorzugt in dem geschlossenen Ende des Zylinders angeordnet ist. Auf diese Weise ergibt sich ein besonders stabiler Schutz aufgrund des geschlossenen Endes des Gehäuses für die Hallsonde und eine besonders robuste Halterung des Permanentmagneten in dem Gehäusegrundkörper. Insbesondere bei einer Ausbildung des Permanentmagneten als Ring oder Hohlzylinder empfiehlt es sich, die Hallsonde so anzuordnen, dass sich die Induktionsachse parallel zu der Zylinderlängsachse des Gehäuses erstreckt.

Mit Vorteil hinsichtlich der Funktion und der Montagefreundlichkeit kann der Magnetfeldsensor gemäß der Erfindung derart ausgebildet sein, dass der Gehäusegrundkörper gegenüber dem geschlossenen Ende ein offenes Ende aufweist und das offene Ende des Gehäuses mittels eines als Steckerbüchse oder Stecker ausgebildeten Formstücks verschlossen ist. Dieser Verschluss kann zum Zweck der Reparatur oder Wartung als zu öffnender Verschluss ausgebildet sein. Da der Reparaturfall erfahrungsgemäß nur selten auftritt und ein besonderes Interesse an der Dichtigkeit des erfindungsgemäßen Magnetfeldsensors besteht, ist dieser Verschluss bevorzugt mit dem Gehäusegrundkörper zu verkleben oder zu verschweißen.

Die verhältnismäßig leichte Hallsonde, welche regelmäßig als Hall-IC ausgebildet ist, ist bevorzugt an einer in dem Gehäuse ebenfalls angeordneten Leiterplatte befestigt und mit dieser elektrisch kontaktiert. Zur Beseitigung eines negativen Einflusses etwaiger an der Hallsonde auftretender Schwingungen ist es zweckmäßig, wenn zwischen der Hallsonde und dem umgebenden Gehäuse verbleibender Raum zumindest zum Teil mit einer dämpfenden Substanz, insbesondere einem Gel gefüllt ist, insbesondere mit einem Zwei-Komponenten-SilikonKautschuk mit einer Shorehärte von etwa A30.

Im Folgenden ist die Erfindung zur Verdeutlichung anhand eines Ausführungsbeispiels unter Bezugnahme auf eine Zeichnung ohne Einschränkung auf dieses Ausführungsbeispiel näher beschrieben.

Es zeigt:

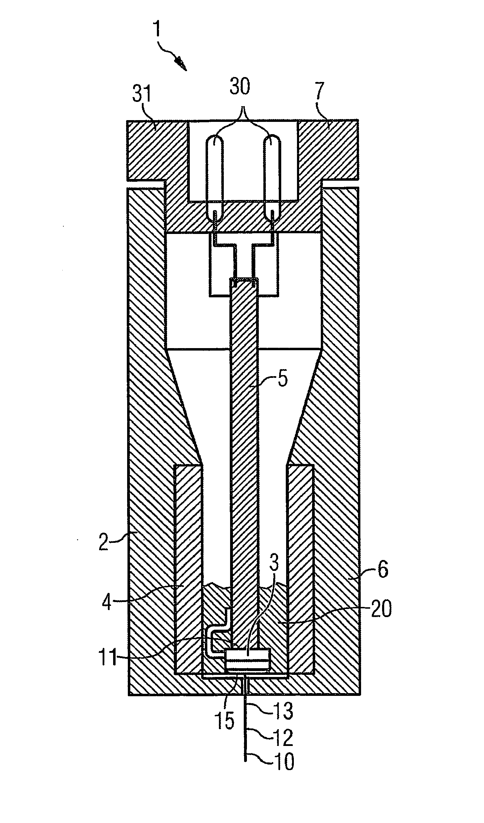

- Figur 1:: einen Längsschnitt durch einen erfindungsgemäßen Magnetfeldsensor.

In Figur 1 ist ein erfindungsgemäßer Magnetfeldsensor 1 mit dem Bezugszeichen 1 versehen. Wesentliche Bestandteile des Magnetfeldsensors 1 sind ein Gehäuse 2, eine Hallsonde 3, ein Permanentmagnet 4, wobei die Hallsonde 3 an einer Leiterplatte 5 befestigt ist.

Das zylindrische Gehäuse 2 weist einen Gehäusegrundkörper 6 und einen als Verschluss ausgebildetes Formstück 7 auf. Das Gehäuse 2 ist von zylindrischer Form, wobei der Gehäusegrundkörper 6 als Spritzgussbauteil aus Kunststoff gefertigt ist, ein geschlossenes Ende 8 und ein offenes Ende 9 aufweist. Entlang einer Zylinderlängsachse 10 des Gehäuses 2 erstreckt sich die Leiterplatte 5. Im Bereich des geschlossenen Endes 8 des Gehäuses 2 ist der als Hohlzylinder ausgebildete Permanentmagnet 4 in dem Gehäusegrundkörper 6 eingegossen.

Auf der Seite des geschlossenen Endes 8 des Gehäusegrundkörpers 6 befindet sich an einer Stirnseite 11 der Leiterplatte 5 die als Hall-IC ausgebildete Hallsonde 3. Eine Induktionsachse 12 der Hallsonde 3 erstreckt sich in Richtung der Zylinderlängsachse 10 des Gehäuses 2, welcher mit der Längsachse 13 des Permanentmagneten 4 zusammenfällt. Die Hallsonde 3 reicht bis zu 0,2 mm an diejenige Stirnseite 15 des Permanentmagneten 4 heran, welche sich auf der Seite des geschlossenen Endes 8 des Gehäuses 2 befindet. Der zwischen der Hall-sonde 3 und dem Gehäusegrundkörper 6 bzw. dem Permanentmagneten 4 verbleibende Raum ist mit einem Gel 20 zum Teil gefüllt, welches Bewegungen zwischen den Bauteilen dämpft.

Das Formstück 7, welches den Gehäusegrundkörper 6 dicht verschließt, ist an dem Gehäusegrundkörper 6 mittels Ultraschallschweißung befestigt. Das Formstück 7 ist ebenfalls als Kunststoffspritzgussbauteil ausgebildet und haltert einerseits die Leiterplatte 5, ist andererseits als Steckerbuchse ausgebildet, wobei Kontakte 30 in das Formstück 7 eingegossen bzw. umspritzt sind.

## Patentansprüche

1. Magnetfeldsensor, insbesondere zur Messung der Drehzahl eines rotierenden Getriebebauteils, mit einer Hallsonde (3), mit mindestens einem Permanentmagneten (4), wobei sich die Hallsonde (3) in dem Einflussbereich des Magnetfeldes des Permanentmagneten (4) befindet, mit einem Gehäuse (2), das einen Gehäusegrundkörper aufweist, welches die Hallsonde (3) umgibt, wobei der Permanentmagnet (4) an dem Gehäuse (2) befestigt ist, wobei das Gehäuse (2) zumindest teilweise aus Kunststoff besteht und der Permanentmagnet (4) als Ring oder Hohlzylinder ausgebildet ist, wobei die Längsachse (13) des Permanentmagneten (4) und eine Induktionsachse (12) des Hallsensors, welche Induktionsachse (12) senkrecht zu der elektrischen Feldrichtung der Hallspannung und der elektrischen Hauptstromrichtung in der Hallsonde (3) orientiert ist, im Wesentlichen zusammenfallen, **dadurch gekennzeichnet, dass** das Gehäuse (2) oder der Gehäusegrundkörper (6) als Spritzgussbauteil ausgebildet ist und der Permanentmagnet (4) in das Gehäuse (2) eingespritzt ist.

2. Magnetfeldsensor nach Anspruch 1, **dadurch gekennzeichnet, dass** der Kunststoff hochtemperaturbeständig ist.

3. Magnetfeldsensor nach mindestens einem der vorhergehenden Ansprüche, **dadurch gekennzeichnet, dass** der Magnetfeldsensor (1) einen Stecker oder eine Steckerbüchse aufweist, welche als Kunststoffteil mit umspritzten Kontakten (30) ausgebildet ist.

4. Magnetfeldsensor nach Anspruch 3, **dadurch gekennzeichnet, dass** Gehäuse (2) einen verschließbaren Gehäusegrundkörper (6) aufweist, die Steckerbüchse und der Gehäusegrundkörper (6) miteinander verschweißt sind.

5. Magnetfeldsensor nach Anspruch 4, **dadurch gekennzeichnet, dass** die Steckerbüchse und der Gehäusegrundkörper (6) mittels einer Ultraschallschweißung, einer vibrationsschweißung oder einer Rotationsschweißung miteinander verbunden sind.

6. Magnetfeldsensor nach mindestens einem der vorhergehenden Ansprüche, **dadurch gekennzeichnet, dass** Gehäuse (2) einen verschließbaren Gehäusegrundkörper (6) aufweist, welcher als einseitig, hülsenartig geschlossener Zylinder ausgebildet ist, wobei in dem geschlossenen Ende (8) die Hallsonde (3) angeordnet ist.

7. Magnetfeldsensor nach Anspruch 6, **dadurch gekennzeichnet, dass** sich die Induktionsachse (12) der Hallsonde (3) parallel zu der Zylinderlängsachse (10) des Gehäuses (2) erstreckt.

8. Magnetfeldsensor nach Anspruch 6 oder 7, **dadurch gekennzeichnet, dass** der Gehäusegrundkörper (6) gegenüber dem geschlossenen Ende (8) ein offenes Ende (9) aufweist und das offene Ende (9) des Gehäuses (2) mittels eines als Steckerbuchse oder Steckers ausgebildeten Formstücks (7) verschlossen ist.

9. Magnetfeldsensor nach mindestens einem der vorhergehenden Ansprüche, **dadurch gekennzeichnet, dass** die Hallsonde (3) an einer Leiterplatte (5) befestigt und mit dieser elektrisch kontaktiert ist.

10. Magnetfeldsensor nach mindestens einem der vorhergehenden Ansprüche, **dadurch gekennzeichnet, dass** zwischen der Hallsonde (3) und dem umgebenden Gehäuse (2) verbleibender Raum zumindest zum Teil mit einer dämpfenden Substanz, insbesondere einem Gel (20) gefüllt ist, insbesondere mit einem 2-Komponenten Silikonkautschuk mit einer Shore-Härte von etwa A30.

## Claims

1. Magnetic field sensor, in particular for measurement of the rotation speed of a rotating transmission component, having a Hall probe (3), having at least one permanent magnet (4), with the Hall probe (3) being located in the area of influence of the magnetic field of the permanent magnet (4), having a housing (2) which has a housing base body and surrounds the Hall probe (3), wherein the permanent magnet (4) is attached to the housing (2), wherein the housing (2) is at least partially composed of plastic and the permanent magnet (4) is in the form of a ring or hollow cylinder, wherein the longitudinal axis (13) of the permanent magnet (4) and an induction axis (12) of the Hall sensor essentially coincide, with the induction axis (12) being oriented at right angles to the electrical field direction of the Hall voltage and to the electrical main current direction in the Hall probe (3), **characterized in that** the housing (2) or the housing base body (6) is in the form of an injection-molded component, and the permanent magnet (4) is sprayed into the housing (2).

2. Magnetic field sensor according to Claim 1, **characterized in that** the plastic is resistant to high temperature.

3. Magnetic field sensor according to at least one of the preceding claims, **characterized in that** the magnetic field sensor (1) has a plug or a plug socket, which is in the form of a plastic part with extrusion-coated contacts (30).

4. Magnetic field sensor according to Claim 3, **characterized in that** the housing (2) has a closable housing base body (6), and the plug socket and the housing base body (6) are welded to one another.

5. Magnetic field sensor according to Claim 4, **characterized in that** the plug socket and the housing base body (6) are connected to one another by means of ultrasound welding, vibration welding or rotation welding.

6. Magnetic field sensor according to at least one of the preceding claims, **characterized in that** the housing (2) has a closable housing base body (6), which is in the form of a cylinder which is closed at one end like a sleeve, with the Hall probe (3) being arranged in the closed end (8).

7. Magnetic field sensor according to Claim 6, **characterized in that** the induction axis (12) of the Hall probe (3) extends parallel to the cylinder longitudinal axis (10) of the housing (2).

8. Magnetic field sensor according to Claim 6 or 7, **characterized in that** the housing base body (6) has an open end (9) opposite the closed end (8), and the open end (9) of the housing (2) is closed by means of a molding (7) which is in the form of a plug socket or plug.

9. Magnetic field sensor according to at least one of the preceding claims, **characterized in that** the Hall probe (3) is attached to a printed circuit board (5) and makes electrical contact with it.

10. Magnetic field sensor according to at least one of the preceding claims, **characterized in that** the space which remains between the Hall probe (3) and the surrounding housing (2) is at least partially filled with a damping substance, in particular a gel (20), in particular with a two-component silicone rubber with a Shore hardness of about A30.

## Revendications

1. Capteur de champ magnétique, destiné notamment à mesurer la vitesse de rotation d'un composant rotatif d'une boîte de vitesses, avec une sonde de Hall (3), avec au moins un aimant permanent (4), la sonde de Hall (3) se trouvant dans la zone d'influence du champ magnétique de l'aimant permanent (4), avec un boîtier (2) comportant un corps de base et qui entoure la sonde de Hall (3), l'aimant permanent (4) étant attaché au boîtier (2), le boîtier (2) étant au moins partiellement en matière plastique et l'aimant permanent (4) se présentant sous forme d'anneau ou de cylindre creux, l'axe longitudinal (13) de l'aimant permanent (4) et un axe d'induction (12) du capteur de Hall coïncidant sensiblement, lequel axe d'induction (12) étant orienté verticalement par rapport au sens du champ électrique de la tension de Hall et au sens du courant électrique principal dans la sonde de Hall (3), **caractérisé en ce que** le boîtier (2) ou le corps de base (6) du boîtier se présente sous forme de composant moulé par injection et que l'aimant permanent (4) est injecté dans le boîtier (2).

2. Capteur de champ magnétique selon la revendication 1, **caractérisé en ce que** la matière plastique est résistante aux hautes températures.

3. Capteur de champ magnétique selon au moins une des revendications précédentes, **caractérisé en ce que** le capteur de champ magnétique (1) comporte une fiche mâle ou une fiche femelle, laquelle se présente sous forme de pièce en matière plastique dotée de contacts (30) enrobés.

4. Capteur de champ magnétique selon la revendication 3, **caractérisé en ce que** le boîtier (2) comporte un corps de base (6) pouvant être fermé, la fiche femelle et le corps de base (6) du boîtier étant soudés l'un à l'autre.

5. Capteur de champ magnétique selon la revendication 4, **caractérisé en ce que** la fiche femelle et le corps de base (6) du boîtier sont assemblés entre eux par une soudure par ultrasons, une soudure par vibration ou une soudure par rotation.

6. Capteur de champ magnétique selon au moins une des revendications précédentes, **caractérisé en ce que** le boîtier (2) comporte un corps de base (6) pouvant être fermé, lequel se présente sous forme de cylindre fermé d'un côté à la manière d'une douille, la sonde de Hall (3) étant agencée dans l'extrémité fermée (8).

7. Capteur de champ magnétique selon la revendication 6, **caractérisé en ce que** l'axe d'induction (12) de la sonde de Hall (3) s'étend parallèlement à l'axe longitudinal de cylindre (10) du boîtier (2).

8. Capteur de champ magnétique selon la revendication 6 ou 7, **caractérisé en ce que** le corps de base (6) du boîtier comporte à l'opposé de l'extrémité fermée (8) une extrémité ouverte (9) et que l'extrémité ouverte (9) du boîtier (2) est fermée par une pièce moulée (7) se présentant sous forme de fiche femelle ou de fiche mâle.

9. Capteur de champ magnétique selon au moins une des revendications précédentes, **caractérisé en ce que** la sonde de Hall (3) est attachée à une plaquette de circuit imprimé (5) et est en contact électrique avec celle-ci.

10. Capteur de champ magnétique selon une des revendications précédentes, **caractérisé en ce que** l'espace subsistant entre la sonde de Hall (3) et le boîtier (2) l'entourant est rempli, au moins en partie, avec une substance amortissante, notamment un gel (20), en particulier avec un caoutchouc de silicone à deux composants ayant une dureté Shore sensiblement égale à A30.
